# EUROPÄISCHE PATENTSCHRIFT

(11) **EP 1 487 078 B1**
(45) Veröffentlichungstag und Bekanntmachung des Hinweises auf die Patenterteilung: **15.10.2008**
(21) Anmeldenummer: 04101393.9
(22) Anmeldetag: 05.04.2004
(51) Int. Cl.: H02H 7/085

(54) **Verfahren zum Initialisieren einer fremdkraftbetätigten Verstellvorrichtung und Vorrichtung zur Durchführung des Initialisierungsverfahrens**
Initialising method for a power assisted adjustement device and device for performing it
Procédé d'initialisation d'un dispositif de réglage actionné par force extérieure et dispositif pour la mise en oeuvre du procédé

(30) Priorität: 06.06.2003 DE 10325890
(43) Veröffentlichungstag der Anmeldung: 15.12.2004
(73) Patentinhaber: Continental Automotive GmbH, 30165 Hannover (DE)
(72) Erfinder: Anderson, Barry, 30024 Suwanee GA Georgia 30024 (US); Ran, Ping, 201805 Shanghai (CN)

(56) Entgegenhaltungen:
- WO-A-01/54246
- DE-A- 19 633 941
- DE-C1- 19 648 248
- GB-A- 2 372 866

## Beschreibung

Die Erfindung bezieht sich auf ein Verfahren gemäß Oberbegriff des Anspruchs 1 und die entsprechende Vorrichtung gemäß Oberbegriff des Anspruchs 10, zum Initialisieren einer fremdkraftbetätigten Verstellvorrichtung, bei der die von einer Antriebseinheit erzeugte Verstellkraft, abhängig von in einem Speichermedium gespeicherten Verstellkraft-Vergleichswerten, von einer Steuereinheit gesteuert/geregelt wird .

Dabei dienen die Vertellkraft-Vergleichswerte insbesondere auch zum Erkennen von Störungen, wie zum Beispiel Blockieren durch Fremdeinwirkung, im Betrieb. Dazu wird bei dem jeweiligen Verstellvorgang die aktuelle Stellkraft in Abhängigkeit vom Verstellweg des Stellgliedes erfasst und mit dem zugehörigen Verstellkraft-Vergleichswert verglichen. Weicht der aktuell gemessene Wert der Stellkraft an der aktuellen Stellgliedposition über eine gegebenenfalls vorgegebene Toleranzgrenze hinaus von dem Verstellkraft-Vergleichswert ab, so wird dies durch die Steuereinheit als Störung erkannt. Nach dem Erkennen einer Störung können dann vorgegebene Störungsroutinen gestartet werden.

Solcherweise bekannte Verstellvorrichtungen werden bevorzugt im Bereich der Fahrzeugtechnik eingesetzt, wo fremdkraftbetätigte Verstellvorrichtungen zum Beispiel zum Erhöhen des Komforts verstärkt eingesetzt werden. Hierbei bestehen häufig Wechselwirkungen oder zumindest mögliche Berührungspunkte zwischen der Verstellvorrichtung und Personen. Beispiele dafür sind insbesondere elektromotorisch, pneumatisch oder hydraulisch angetrieben verstellbare Kraftfahrzeugfenster, Schiebe-Hebedächer, Cabrio-Dächer, Fahrzeugtüren, Verschlussdeckel, Fahrzeugsitze, Personen-Rückhaltesysteme, Fahr werksteile oder ähnliche bewegliche Fahrzeugteile, sowohl bei Land- als auch bei Luft- oder Wasserfahrzeugen.
Aber auch in anderen Bereichen des Maschinenbaus kann das erfindungsgemäße Verfahren zum Einsatz kommen. Als Beispiele seien hier Bedienerschutzvorrichtungen an Produktionsmaschinen oder auch elektrisch, hydraulisch oder pneumatisch betriebene Tore, Türen, Fenster von Hallen, Häusern, Räumen, Einfriedungen oder Fahrstühlen genannt.

Hier werden vor allem für die Personensicherheit relevante Störungen beim Verstellvorgang abgesichert. Eine solche Störung liegt beispielsweise vor beim Einklemmen von Körperteilen zwischen Scheibe und Rahmen beim automatischen Schließvorgang eines elektromotorisch betriebenen Fensterhebers eines Kraftfahrzeuges. Hier ist die Personensicherheit zu gewährleisten, indem die Einklemmkräfte bei Schließvorgängen auf ein Maß begrenzt werden, welches keine Personenschäden hervorrufen kann.

Aus der Fahrzeugtechnik ist beispielsweise ein Fensterheber mit einer Einklemmschutz-Sicherheitsschaltung, für Automobile oder ähnliche Kraftfahrzeuge, bekannt (DE 33 03 590 C2). Dieser Fensterheber weist einen elektronischen Leistungsmesser zur ständigen Messung der Leistungsaufnahme des Antriebsmotors und ein Speichermedium auf, in welchem ein Leistungs-Hubwegdiagramm abgelegt ist. Dem Leistungs-Hubwegdiagramm ist eine Leistungs-Toleranzgrenze derart zugeordnet, dass beim Auftreten einer die vorgegebene Toleranzgrenze übersteigenden Leistung die Stromflussrichtung am antreibenden Elektromotor unterbrochen oder umgekehrt wird.

Weiterhin ist aus der Patentschrift DE 196 33 941 C2 eine Fensterhebereinheit bekannt, bei der aus dem Motorstrom die Antriebskraft errechnet wird, die beim ersten Schließvorgang des Schließteils, insbesondere des Fensters bzw. des Schiebedaches, im Zuge der Herstellung des Kraftfahrzeuges, in Abhängigkeit von der jeweiligen Hubwegposition in einem Dia gramm erfasst und in einer Speichereinheit abgelegt ist. Damit lässt sich dann bei den folgenden betriebsmäßigen Bewegungsvorgängen des Schließteils ein solcher Motorstrom einstellen, dass die Motorkraft genau der jeweils benötigten Reibungskraft entspricht. Die Reibungskraft wird dann zur endgültigen Ansteuerung des Elektromotors des Stellungsantriebs um die zulässige Einklemmkraft erhöht.

Für einen wirksamen Einklemmschutz zwischen einem durch eine motorische Fremdkraftbetätigung schließendem Fahrzeugteil und einem zur Gegenlage kommenden Hindernis sind im zunehmenden Maße strengere Vorschriften zu erfüllen. Entsprechend diesen Vorschriften muss unter anderem der Schließvorgang abgebrochen oder das Fenster, die Trennwand oder das Dachteilsystem in umgekehrter Bewegungsrichtung angetrieben werden, bevor es/sie eine Kraft von 100 Newton oder mehr ausübt.

Die Einklemmkraft ist dabei als der Antriebskraft-Überschuss definiert, der über die zur Überwindung der systemimmanenten statischen und/oder dynamischen Gegenkräfte (z.B. Reibungskraft) zur Verstellung des Stellgliedes notwendigen Stellkraft hinausgeht. Durch Nichtlinearitäten in der Kraftübertragung zwischen dem Antrieb und dem Stellglied und durch Schwankungen der Gegenkräfte entlang des Verstellweges ergibt sich eine nicht konstante erforderliche Stellkraft entlang des Verstellweges, die hier als Stellkraftkurve bezeichnet wird.

Bei der aus der DE 196 33 941 C2 bekannten Vorrichtung wird eine Stellkraftkurve beim ersten Schließvorgang erfasst und dann als Reibungskraft-Hubweg-Diagramm im Speicher der Steuerung abgespeichert und zur Regelung des Antriebes herangezogen. Der Antrieb wird nun so angesteuert, dass die Gesamt-Antriebskraft an jeder Stelle des Verstellweges, der durch das Reibungskraft-Hubweg-Diagramm vorgegebenen Stellkraft, erhöht um das vorgegebene Maß der höchstzulässigen Einklemmkraft, entspricht. Erniedrigt sich nun nach dem Festlegen des Reibungskraft-Hubweg-Diagramms die erforderliche Mindestverstellkraft z. B. durch das Einfahrverhalten der Getriebemechanik, so steigt die Einklemmkraft um das entsprechende Maß an und überschreitet ggf. den Grenzwert.

Um also die geforderten Grenzwerte der Einklemmkraft gewährleisten zu können, ist eine möglichst exakte Vorgabe oder Ermittlung von Verstellkraft-Vergleichswerten entlang des Verstellweges unbedingt erforderlich. Dies wird jedoch erschwert durch die Nichtlinearitäten in der Kraftübertragung, z.B. einer Getriebemechanik, zwischen dem Antrieb, z.B. einem Elektromotor, und dem Stellglied, z.B. einem Fahrzeugfenster. Diese Nichtlinearitäten werden verursacht durch verstellwegabhängige kinematische Gegebenheiten der Kraftübertragungsmechanik sowie durch über dem Verstellweg schwankende, der Stellkraft entgegenwirkende, systemimmanente Reibkräfte. Ein weiteres Problem bei der exakten Vorgabe oder Ermittlung der Verstellkraft-Vergleichswerte ergibt sich aus produktionstechnisch toleranzbedingten Schwankungen der systemimmanenten Reibkräfte innerhalb einer Produktionsserie und dem Einfahrverhalten der gesamten kinematischen Anordnung von der Antriebseinheit bis zum Stellglied.

Aus der DE 100 34 014 A1 ist ein Verfahren zum Betrieb einer elektrischen Antriebseinheit bekannt, bei dem ein Einklemmschutz durch Vergleich der Überschusskraft als Differenz zwischen der Antriebskraft und der Reibkraft mit einem Auslöseschwellwert realisiert wird. Der vom Betätigungsweg der elektrischen Antriebseinheit abhängige Verlauf der Reibkraft des aktuellen Betätigungsvorgangs wird mit dem Verlauf der Reibkraft mindestens eines zurückliegenden Betätigungsvorgangs verglichen. Der Auslöseschwellwert wird in Abhängigkeit der Übereinstimmung der Verläufe der Reibkraft des aktuellen Betätigungsvorgangs und mindestens eines zurückliegenden Betätigungsvorgangs verändert.

Der Erfindung liegt die Aufgabe zugrunde, für jede einzelne Verstellvorrichtung im endgültigen Montagezustand Verstellkraft-Vergleichswerte bereitzustellen, die dem störungsfreien Betrieb unter bestimmungsgemäßen Normalbedingungen möglichst gut entsprechen.

Diese Aufgabe wird durch die Merkmale des im Patentanspruch 1 beschriebenen Verfahrens und durch die Merkmale der im Anspruch 10 beschriebenen Vorrichtung gelöst.

Bei der Verstellvorrichtung, welche ein fremdkraftbetätigtes Stellglied, eine Steuereinheit mit mindestens einem elektronischen Speichermedium und eine Antriebseinheit aufweist, wird die von der Antriebseinheit erzeugte Verstellkraft, abhängig von im Speichermedium gespeicherten Verstellkraft-Vergleichswerten, von der Steuereinheit gesteuert/geregelt. Das Initialisierungsverfahren und die Verstellvorrichtung sind dadurch gekennzeichnet, dass die Steuereinheit innerhalb eines Initialisierungsablaufes die Verstellvorrichtung eine vorgegebene Anzahl von Verstellzyklen durchlaufen lässt, mehrere Verstellkraftwerte entlang einem Verstellweg von der Steuereinheit gemessen und im Speichermedium gespeichert werden und aus den Verstellkraftwerten innerhalb des Initialisierungsablaufes Verstellkraft-Vergleichswerte ermittelt und im Speichermedium abgespeichert werden.

Die mit der Erfindung erzielten Vorteile bestehen darin, dass eine überhöhte Stellkraft oder Einklemmkraft beim fremdkraftbetätigten Verstellen eines Stellgliedes mit erhöhter Sicherheit vermieden werden kann.

Die Erfindung sowie weitere vorteilhafte Ausgestaltungen der Erfindung gemäß den Merkmalen der Unteransprüche werden im folgenden mit Hilfe schematischer Darstellungen in der Zeichnung näher erläutert; darin zeigen:
- Fig. 1: ein Blockschaltbild einer erfindungsgemäßen Verstellvorrichtung mit Kraft-Weg-Messung und Speichermedium zum Speichern von Verstellkraft-Vergleichswerten;
- Fig. 2: einen schematischen Aufbau einer Fensterheberanordnung in einem Kraftfahrzeug mit den am Fenster angreifenden Kräften;
- Fig. 3: ein Kraft-Weg-Diagramm einer Fensterheberanordnung, aufgenommen beim ersten vollständigen Verstellvorgang nach Inbetriebnahme;
- Fig. 4: ein Kraft-Weg-Diagramm mit VerstellkraftVergleichskennlinie, aufgenommen beim zehnten vollständigen Verstellvorgang nach Inbetriebnahme der Vorrichtung und die dazugehörige Stellkraftobergrenze; und
- Fig. 5: ein Ablaufdiagramm eines Initialisierungsablaufes zur Aufnahme von Verstellkraft-Vergleichswerten.

Funktions- oder bedeutungsgleiche Gegenstände sind in den Figuren mit den selben Bezugszeichen versehen.

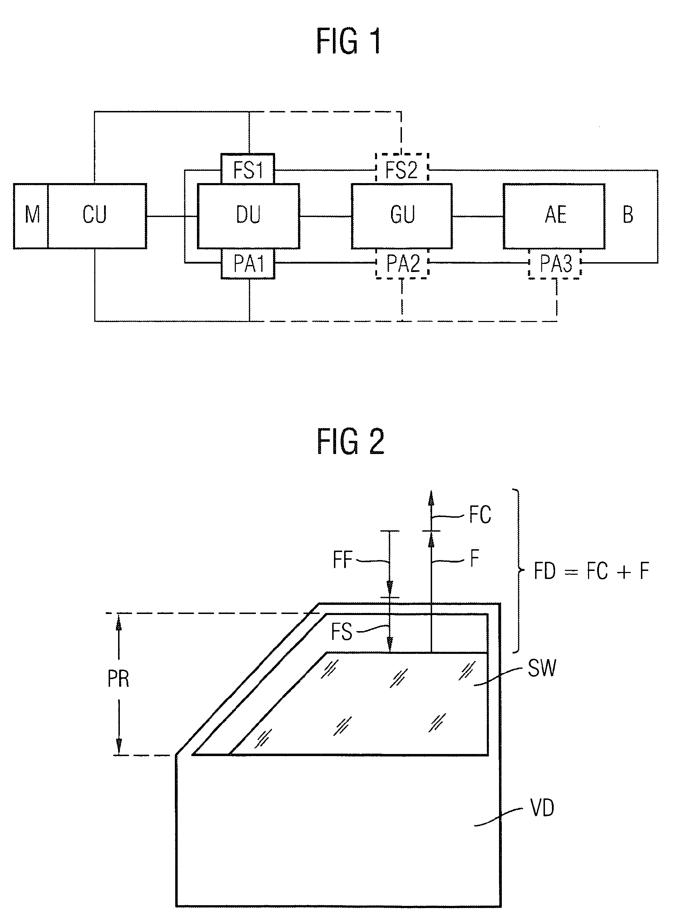

Figur 1 zeigt einen grundlegenden Aufbau einer Stellvorrichtung mit Stellkraft-Verstellweg-Überwachung in einem Blockschaltbild. Die Vorrichtung weist eine Steuereinheit CU mit einem Speichermedium M, eine Antriebseinheit DU, eine Getriebemechanik GU, ein Stellglied AE und ein Wirksystem B auf. Weiterhin sind ein Stellkraftaufnehmer FS1 und ein Wegaufnehmer PA1 sowie alternative Anordnungen für diese beiden Aufnehmertypen mit den Bezugszeichen FS2, PA2 und PA3 dargestellt. Übertragen auf eine Fensterhebervorrichtung für ein Kraftfahrzeug, entsprechen die Antriebseinheit DU einem Elektromotor, die Getriebemechanik GU einem Untersetzungsgetriebe am Elektromotor und einer Hubmechanik in der Fahrzeugtür, das Stellglied AE einem Seitenfenster und das Wirksystem B einer Fahrzeugtür mit Rahmen, welcher ggf. durch eine Karosserie gebildet wird.

Die Steuereinheit kann dabei direkt dem Elektromotor zugeordnet oder auch zentral angeordnet sein. Die Antriebseinheit DU die Getriebemechanik GU, das Stellglied AE stehen gegenseitig und mit dem umgebenden Wirksystem in direkter Wirkverbindung. Die Aufnehmer für den Stellweg und die Stellkraft können an verschiedenen Stellen der Stellvorrichtung angebracht sein. Die Stellkraft kann durch den Aufnehmer FS1 direkt an der Antriebseinheit DU z. B. über den Motorstrom eines Elektromotors ermittelt werden oder auch durch Aufnehmer FS2, wie z. B. Dehnmessstreifen, an geeigneten Stellen der Getriebemechanik GU. Der korrespondierende Stellweg kann sowohl durch Aufnehmer PA1 direkt an der Antriebseinheit DU, z. B. durch Auswertung der Motorumdrehungen, sowie durch Aufnehmer PA2 an der Getriebemechanik GU als auch durch Aufnehmer PA3 am Stellglied AE ermittelt werden.

Figur 2 zeigt den Aufbau einer Stellvorrichtung anhand eines Seitenfensters in einer Kraftfahrzeugtür VD. Der Verstellbereich PR der Seitenscheibe SW reicht von "ganz geöffnet" bis vollständig geschlossen". Zusätzlich sind die Kräfte die im Schließvorgang auf die Seitenscheibe einwirken eingezeichnet. Es sind dies: Die Gewichtskraft der Scheibe als statische Gegenkraft FS, die Reibkraft FF und die Antriebskraft FD, die sich aus der mindestens erforderliche Stellkraft F und der Klemmkraft FC zusammensetzt.

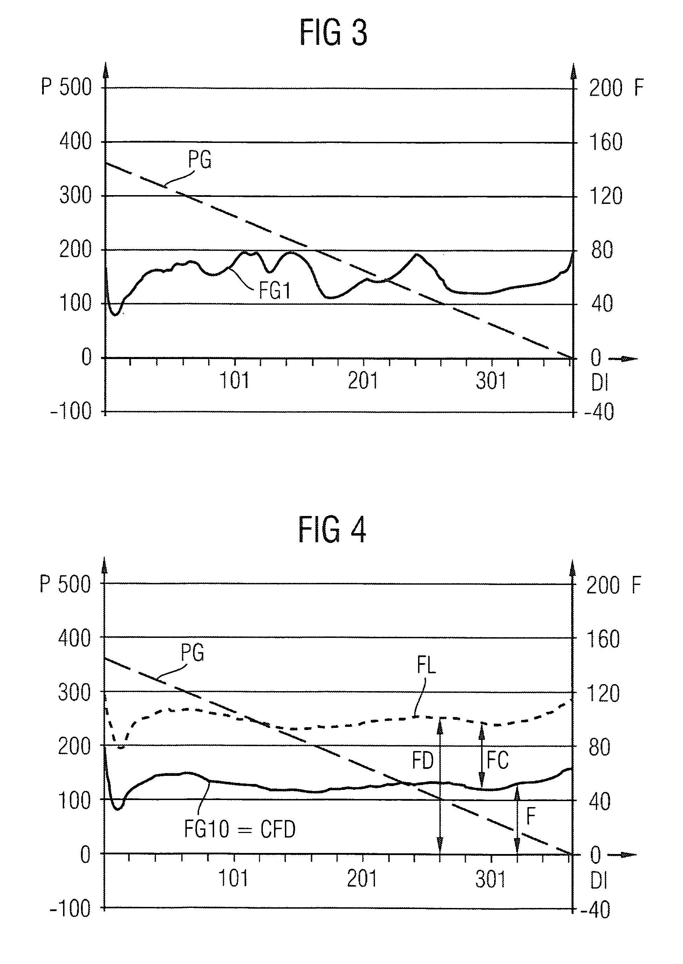

Ein Stellkraft-Stellweg-Diagramm in Figur 3 zeigt die Position P des Stellgliedes/Kraftfahrzeug-Seitenscheibe und die gemessene erforderliche Stellkraft F aufgetragen über der Anzahl von Antriebsimpulsen DI, die der Antrieb liefert. Aufgezeichnet ist hier nur der Verstellvorgang von einer Ausgangsposition (ganz geöffnet) des Stellgliedes bis zu einer Endposition (vollständig geschlossen), was dem Schließvorgang des Fensters entspricht.

Die Stellkraftkurve FG1 zeigt den Verlauf der Stellkraft F für den kompletten Schließvorgang innerhalb des ersten Verstellzyklus. Die Stellkraft ist hier über der Anzahl der Antriebsimpulse DI aufgetragen, welche Anzahl in linearem Zusammenhang mit dem Stellweg des Stellgliedes steht. Dieser lineare Zusammenhang wird durch die dargestellte Stellglied-Positionskurve PG gezeigt, welche die Position des Stellgliedes bei der jeweiligen Anzahl von Antriebsimpulsen DI aufzeigt. Zur Aufnahme der Stellkraftkurve PG wird von einer gleichförmigen Bewegung des Stellgliedes ausgegangen. Die Stellkraftkurve FG1 zeigt einen stark über dem Stellweg schwankende Stellkraft F, was auf fertigungsbedingte Toleranzschwankungen in Antrieb und Getriebemechanik und ggf. ungleiche Schmiermittelverteilung zurückzuführen ist.

Figur 4 zeigt ein Stellkraft-Stellweg-Diagramm in gleicher Zusammenstellung wie das Diagramm Figur 3, für die gleiche Verstellvorrichtung. Hier ist die Stellkraft F jedoch erst beim zehnten kompletten Verstellzyklus nach der Inbetriebnahme als Stellkraftkurve FG10 aufgezeichnet worden. Im Gegensatz zu der Stellkraftkurve FG1 in Figur 3 sind die Stellkraftschwankungen hier bereits wesentlich kleiner und die erforderliche Stellkraft im Mittel erheblich niedriger. Dies zeigt deutlich den Einfahreffekt der Fensterhebermechanik, der sich hier bereits nach zehn Verstellzyklen eingestellt hat. Dieser Einfahreffekt basiert darauf, dass sich ggf. fertigungstechnisch gegebene Kanten, Grate, Rauhigkeiten von gegeneinander bewegten Antriebs- oder Getriebeteilen innerhalb der ersten Verstellzyklen aneinander anpassen oder sich gegenseitig glätten. Ebenfalls verteilt sich ggf. lokal eingebrachtes Schmiermittel und gewährleistet dadurch einen reibungsärmeren Lauf nach einigen Verstellzyklen.

Geht man nun davon aus, dass bereits nach den oben genannten 10 Verstellzyklen der vollständig eingefahrene Zustand erreicht ist und sich keine weiteren Änderungen einstellen werden, so können zumindest einzelne Werte dieser Kurve als Verstellkraft-Vergleichswerte bezogen auf die jeweilige Position der Seitenscheibe herangezogen und abgespeichert werden.
Für jede einzelne Verstellvorrichtung werden innerhalb eines Initialisierungsablaufes die vorrichtungsspezifischen Verstellkraft-Vergleichswerte ermittelt und abgespeichert. Durch Aneinanderreihen oder durch Verbinden der einzelnen Verstellkraftwerte entlang dem Verstellweg ergibt sich wiederum eine Stellkraftkurve, die ggf. als Verstellkraft-Vergleichskurve CFD abgespeichert werden kann.

Dies kann erfolgen, wenn die Verstellvorrichtung beispielsweise als Moduleinheit vormontiert funktionsfähig ist. Vorzugsweise werden die Verstellkraft-Vergleichswerte jedoch im endgültigen, eingefahrenen Endmontagezustand des Gesamtsystems (z.B. Fensterheber) ermittelt, um sicherzustellen, dass alle Umgebungseinflüsse Berücksichtigung finden.

In das Diagramm von Figur 4 ist zusätzlich die Stellkraftgrenzkurve FL eingetragen. Diese Stellkraftgrenzkurve FL ergibt sich durch Addieren der Klemmkraft FC zu jedem einzelnen aufgenommenen Verstellkraft-Vergleichswert und das Aneinanderreihen oder Verbinden der so errechneten Punkte, wie in Fig. 4 dargestellt. So ist für jeden Punkt des Stellweges die maximal erlaubte Antriebskraft FD festgelegt. Steigt die aktuell im betriebsmäßigen Verstellvorgang gemessene Stellkraft über diese Grenze hinaus an, so wird von einer Störung, z. B. einer Einklemmung ausgegangen und der Antrieb gestoppt oder die Antriebsrichtung umgekehrt.

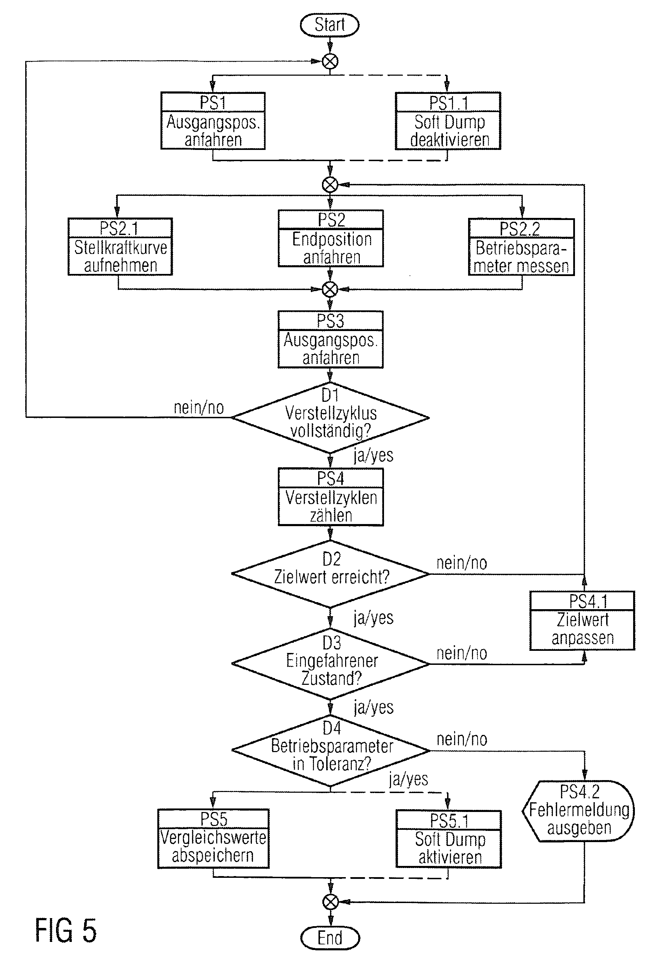

Figur 5 zeigt ein vereinfachtes schematisches Ablaufdiagramm eines möglichen Initialisierungsablaufs zur Aufnahme der Verstellkraft-Vergleichswerte. In diesem Ablaufdiagramm sind die einzelnen Prozessschritte mit PS1 bis PS5 und die zu treffenden Entscheidungen mit D1 bis D4 gekennzeichnet.

Der Initialisierungsablauf wird bei Erstinbetriebnahme der Verstellvorrichtung automatisch gestartet.
Selbstverständlich kann der Initialisierungsablauf auch, z. B. nach einer Reparatur, Austausch oder im Rahmen eines routinemäßigen Kundendienstes, erneut durch dafür vorgesehene Steuerbefehle aufgerufen und durchlaufen werden. So können die Verstellkraft-Vergleichswerte auch an geänderte Umgebungsbedingungen und alterungsbedingt veränderliche Gegenkräfte angepasst werden.

Nach dem Start wird eine vorgegebenen Anzahl von Einfahr-Verstellzyklen betriebsmäßig komplett durchlaufen. Ein Verstellzyklus beinhaltet dabei die Verstellung des Stellgliedes von einer Ausgangsposition, z. B. "ganz geöffnet", bis zu der gegenüberliegenden Endposition auf dem Stellweg, z. B. "vollständig geschlossen", und wieder zurück zur Ausgangsposition. Dazu wird im Programmschritt PS1 zunächst sichergestellt, dass sich das Stellglied in der vorgegebenen Ausgangsposition, befindet, indem der Antrieb das Stellglied in vorgegebener Richtung bis an einen mechanischen Endanschlag bewegt.

In der anschließenden Programmschleife, welche die Programmschritte PS2, PS2.1, PS2.2, PS3, PS4 sowie die Entscheidungen D1 und D2 enthält wird nun die vorgegebene Anzahl von Einfahr-Verstellzyklen durchlaufen. Zunächst wird Programmschritt PS2 gestartet. In diesem Programmschritt wird das Stellglied vom Antrieb mit konstanter Geschwindigkeit aus der Ausgangsposition bis in die gegenüberliegende Endposition gefahren. Gleichzeitig dazu werden in Programmschritt PS2.1 die Stellkraftwerte und in Programmschritt PS2.2 ein weiterer Betriebsparameter, z. B. die Antriebstemperatur, aufgenommen und in einem Zwischenspeicher abgelegt.
Nach Erreichen der Endposition wird im Programmschritt PS3 das Stellglied wieder in die Ausgangsposition zurückgefahren. Im darauffolgenden Entscheidungsschritt D1 wird abgefragt, ob der Verstellzyklus vollständig durchlaufen ist. Ist dies nicht der Fall wird im Ablauf des Programms wieder vor den Programmschritt PS1 zurückgegangen und der Initialisierungsablauf beginnt von vorne.

Ist dagegen der Verstellzyklus vollständig durchlaufen, wird im folgenden Programmschritt PS4 die Anzahl der bereits vollständig durchlaufenen Verstellzyklen festgehalten und im Entscheidungsschritt D2 mit einem vorgegebenen Einfahr-Zählwert verglichen. Dabei kann dieser Einfahr-Zählwert jeweils schrittweise bis auf einen Zielwert, z. B. null, dekrementiert oder ein Zyklen-Zähler bei einem Startwert, z. B. null, beginnend nach jedem vollständig durchlaufenen Verstellzyklus bis zum Wert des Einfahr-Zählwertes schrittweise inkrementiert werden. Solange die Zählwertvorgabe im Entscheidungsschritt D2 nicht erreicht ist wird im Ablauf wieder vor den Programmschritt PS2 zurückgesprungen und der nächste Verstellzyklus gestartet.

Die vorgegebene Anzahl der Einfahr-Verstellzyklen gewährleistet, dass sich das Gesamtsystem bei der Aufnahme der Verstellkraft-Vergleichswerte CFD bereits im eingefahrenen Zustand befindet. Auf diese Weise werden alle systemspezifischen Einflussgrößen auf die verstellwegabhängige Stellkraft berücksichtigt. Die erforderliche Mindestanzahl der Einlauf-Verstellzyklen kann je nach Art und Aufbau der Verstellvorrichtung unterschiedlich sein und wird beispielsweise im Rahmen der Entwicklung bestimmt. Durch Vergleich der Stellkraftwerte mehrerer aufeinanderfolgender Verstellzyklen kann ermittelt und beurteilt werden, ob sich das System bereits im eingefahrenen Zustand oder noch im Bereich starker Stellkraftänderungen befindet. Ist nach einer vorgegebenen Anzahl von Einfahr-Verstellzyklen der eingefahrene Zustand noch nicht erreicht, was im Entscheidungsschritt D3 überprüft wird, kann die Steuerung ggf. die Anzahl der Einfahr-Verstellzyklen automatisch erhöhen, wie in Programmschritt PS4.1 vorgegeben, oder den Initialisierungsablauf neu starten.

Ist in Entscheidungsschritt D3 der eingefahrene Zustand erreicht, wird im darauffolgenden Entscheidungsschritt D4 überprüft, ob die im Initialisierungsablauf aufgenommene Stellkraftwerte gültig sind.

Dieser Programmschritt ist insbesondere dann empfehlenswert, wenn je nach Art der Antriebseinheit, der Mechanik zur Kraftübertragung oder zur Führung des Stellgliedes die erforderliche Stellkraft zusätzlich von weiteren Umgebungsparametern abhängig ist, welche wiederum Schwankungen unterworfen sein können. Auch das Verhalten der verwendeten Messwert-Aufnehmer oder Messverfahren zur Messung der Stellkraft oder des Stellweges kann zumindest die gelieferten Messwerte beeinflussen. So kann beispielsweise die Umgebungstemperatur, die Luftfeuchtigkeit, die Betriebstemperatur einzelner Vorrichtungsteile oder die räumliche Lage der Vorrichtung bezüglich der Schwerkraft starken Einfluss nehmen auf die systemimmanenten Gegenkräfte, oder die genannten Messwerte.

Insbesondere bei der Aufnahme der Stellkraftwerte, die als Verstellkraft-Vergleichswerte abgespeichert werden sollen, ist deshalb darauf zu achten, dass die Messung unter standardisierten Randbedingungen erfolgt. Zur Sicherstellung dieser Randbedingungen kann deshalb die messtechnische Erfassung weiterer Betriebsparameter vorgesehen werden. Innerhalb der Initialisierungsroutine werden diese Messwerte dann bei der Gültigkeitsüberprüfung in Entscheidungsschritt D4 zur Beurteilung der Randbedingungen herangezogen.

Liegen die Messwerte innerhalb von definierten Toleranzgrenzen, ergibt die Gültigkeitsüberprüfung in Entscheidungsschritt D4, dass die Stellkraftwerte gültig sind. Im darauffolgenden Programmschritt PS5 werden dann die Stellkraftwerte als Verstellkraft-Vergleichswerte abgespeichert und die Initialisierungsroutine ist beendet.

Liegen Messwerte außerhalb der definierten Toleranzgrenzen, werden die aufgenommene Stellkraftwerte als ungültig bewertet, und nicht als Verstellkraft-Vergleichswerte abgespeichert. In der Folge wird dann in Programmschritt PS4.2 eine Fehlermeldung ausgegeben. Alternativ kann, bei genauer Kenntnis des Einflusses des betreffenden Betriebsparameters auf den Stellkraftverlauf ggf. auch eine rechnerische Korrektur der Stellkraftwerte in Abhängigkeit vom Wert des betreffenden Betriebsparameters erfolgen, bevor diese als Verstellkraft-Vergleichswerte abgespeichert werden.

Als Verstellkraft-Vergleichswerte können beispielsweise, wie in Figur 4, die jeweils während des letzten Einfahr-Zyklus aufgenommenen Stellkraftwerte herangezogen werden. Es können jedoch auch Stellkraft-Vergleichswerte aus einer Anzahl von gemessenen Stellkraftwerten mehrerer Verstellzyklen z. B. durch Mittelwertbildung oder Extrapolation ermittelt werden.

Durch Vergleich der Stellkraftwerte mehrerer aufeinanderfolgender Einfahr-Verstellzyklen und ggf. durch herausfiltern von Ausreißerwerten kann auch ein repräsentativer Verstellzyklus gewählt und dessen Stellkraftwerte als Verstellkraft-Vergleichswerte herangezogen werden.

Die so ermittelten Stellkraft-Vergleichswerte werden, falls Gültigkeit gegeben ist, im Speichermedium abgespeichert und der Initialisierungsablauf wird abgeschlossen.

Im Normalbetrieb der Verstellvorrichtung können zusätzliche Steuerungsfunktionen, zum Beispiel so genannte "Soft Dump Funktionen" beim Steuern der Verstellvorrichtung eingesetzt werden. Eine solche Funktion kann bewirken, dass das Stellglied, bevor es gegen einen mechanischen Endanschlag läuft zunächst verlangsamt wird und so sanft in seine Endposition läuft. Bei der Aufnahme einer Stellkraftkurve innerhalb des Initialisierungsablaufes können sich solche Funktionen verfälschend auf die aufzunehmenden Stellkraftwerte auswirken. Aus diesem Grund können solche Funktionen zu oder vor Beginn des Programmschrittes PS1 innerhalb der Initialisierungsroutine im Programmschritt PS1.1 deaktiviert und zum oder nach Abschluss des Programmschrittes PS5 im Programmschritt PS5.1 wieder aktiviert werden.

## Patentansprüche

1. Verfahren zum Initialisieren einer Verstellvorrichtung, welche ein fremdkraftbetätigtes Stellglied (AE), eine Steuereinheit (CU) mit mindestens einem elektronischen Speichermedium (M) und eine Antriebseinheit (DU) aufweist,
wobei die von der Antriebseinheit (DU) erzeugte Verstellkraft (F) abhängig von im Speichermedium (M) gespeicherten Verstellkraft-Vergleichswerten (CFD) von der Steuereinheit (CU) gesteuert/geregelt wird,
**dadurch gekennzeichnet, dass**
- die Steuereinheit innerhalb eines Initialisierungsablaufes die Verstellvorrichtung eine vorgegebene Anzahl von Verstellzyklen durchlaufen lässt,
- in jedem dieser Verstellzyklen jeweils mehrere Verstellkraftwerte an zugeordneten Stellgliedpositionen entlang eines Verstellweges von der Steuereinheit gemessen und im Speichermedium gespeichert werden und
- aus mehreren Verstellkraftwerten innerhalb des Initialisierungsablaufes Verstellkraft-Vergleichswerte (CFD) für zugeordnete Stellgliedpositionen ermittelt und im Speichermedium (M) abgespeichert werden,
wobei die Verstellkraft-Vergleichswerte (CFD) aus Verstellkraftwerten, die im letzten Verstellzyklus der vorgegebenen Anzahl von Verstellzyklen gemessen werden, oder aus einer Anzahl von gemessenen Verstellkraftwerten mehrerer Verstellzyklen ermittelt werden.

2. Verfahren nach Anspruch 1, **dadurch gekennzeichnet, dass** der Initialisierungsablauf erst im endgültigen Montagezustand der Verstellvorrichtung durchlaufen wird.

3. Verfahren nach einem der vorgenannten Ansprüche, **dadurch gekennzeichnet, dass** die Anzahl der innerhalb des Initialisierungsablaufes zu durchlaufenden Verstellzyklen durch einen Zielwert vorgegeben ist, bis zu dem nach jedem vollständig durchlaufenen Verstellzyklus in definierten Schritten ausgehend von einem Startwert dekrementiert oder inkrementiert wird.

4. Verfahren nach einem der vorgenannten Ansprüche, **dadurch gekennzeichnet, dass** die Steuereinheit anhand der Stellkraftwerte mehrerer aufeinanderfolgender Verstellzyklen den Einfahrzustand der Verstellvorrichtung ermittelt/bewertet und die Anzahl der innerhalb des Initialisierungsablaufes zu durchlaufenden Verstellzyklen nach Bedarf variiert.

5. Verfahren nach einem der vorgenannten Ansprüche, **dadurch gekennzeichnet, dass** zusätzlich zu den Stellkraftwerten mindestens ein weiterer Betriebs- oder Umgebungsparameter der Verstellvorrichtung von der Steuereinheit an mindestens einer Position des Verstellweges gemessen wird.

6. Verfahren nach Anspruch 5, **dadurch gekennzeichnet, dass** die Verstellkraft-Vergleichswerte (CFD) nur ermittelt oder abgespeichert werden, wenn der mindestens eine weitere Betriebs- oder Umgebungsparameter während des Initialisierungsablaufes nicht über vorgegebene Toleranzgrenzen hinaus von einem vorgegebenen Normalwert abweicht.

7. Verfahren nach Anspruch 5, **dadurch gekennzeichnet, dass** der mindestens eine weitere Betriebs- oder Umgebungsparameter in der Steuereinheit (CU) zur Korrektur der im jeweiligen Initialisierungsablauf ermittelten Stellkraft-Vergleichswerte (CFD) herangezogen wird und die korrigierten Verstellkraft-Vergleichswerte (CFD) abgespeichert werden.

8. Verfahren nach einem der vorgenannten Ansprüche, **dadurch gekennzeichnet, dass** Ausgangs-, Umkehr- und/ oder Endpositionen innerhalb eines Verstellzyklus während des Initialisierungsablaufes durch Gegenlaufen mindestens eines Stellglieds der Verstellvorrichtung gegen einen mechanischen Festanschlag festgelegt werden.

9. Verfahren nach Anspruch 8, **dadurch gekennzeichnet, dass** Steuerungsfunktionen zum gedämpften oder gebremsten Gegenlaufen des mindestens einen Stellgliedes gegen einen mechanischen Festanschlag während des Initialisierungsablaufes deaktiviert werden.

10. Verstellvorrichtung mit mindestens einem fremdkraftbetätigten Stellglied (AE), mindestens einer Antriebseinheit (DU), einer Übertragungsmechanik (GU) und mindestens einer Steuereinheit (CU) wobei die Steuereinheit (CU) die von der Antriebseinheit (DU) erzeugte Verstellkraft (F) abhängig von Verstellkraft-Vergleichswerten (CFD) steuert/regelt,
**dadurch gekennzeichnet, dass**
die Steuereinheit (CU) mit mindestens einem elektronischen Speichermedium (M) elektrisch verbunden ist, wobei die Steuereinheit (CU) dazu vorgesehen ist, innerhalb eines Initialisierungsablaufs die Verstellvorrichtung eine vorgegebene Anzahl von Verstellzyklen durchlaufen zu lassen, mehrere Verstellkraftwerte an zugeordneten Stellgliedpositionen entlang eines Verstellweges zu messen und im Speichermedium (M) zu speichern und aus mehreren Verstellkraftwerten innerhalb des Initialisierungsablaufes Verstellkraft-Vergleichswerte (CFD) für zugeordnete Stellgliedpositionen zu ermitteln und im Speichermedium (M) abzuspeichern wobei die Steuereinheit die Verstellkraft-Vergleichswerte (CFD) aus Verstellkraftwerten, die im letzten Verstellzyklus der vorgegebenen Anzahl von Verstellzyklen gemessen werden, oder aus einer Anzahl von gemessenen Verstellkraftwerten mehrerer Verstellzyklen ermittelt.

## Claims

1. Method for initialising an adjusting device, which comprises a power-activated actuating element (AE), a control unit (CU) with at least one electronic storage medium (M) and a drive unit (DU), whereby the adjusting force (F) generated by the drive unit (DU) is controlled/regulated by the control unit (CU) as a function of adjusting force comparison values (CFD) stored in the storage medium (M),
**characterised in that**
- the control unit allows the adjusting device to run through a predefined number of adjusting cycles within the initialisation process,
- a plurality of adjusting force values are measured by the control unit at assigned actuating element positions along an adjusting path within individual adjusting cycles and stored in the storage medium and
- adjusting force comparison values (CFD) for assigned actuating element positions are determined from a plurality of adjusting force values within the initialisation process and stored in the storage medium (M),
with the adjusting force comparison values (CFD) being determined from adjusting force values, which are measured in the last adjusting cycle of the predefined number of adjusting cycles, or from a number of measured adjusting force values of a plurality of adjusting cycles.

2. Method according to claim 1, **characterised in that** the initialisation process is only run through in the final assembly state of the adjusting device.

3. Method according to one of the preceding claims, **characterised in that** the number of adjusting cycles to be run through within the initialisation process is predefined by a target value, to which it is decremented or incremented in defined stages from a start value after every completely run through adjusting cycle.

4. Method according to one of the preceding claims, **characterised in that** the control unit determines/evaluates the run-in state of the adjusting device based on the actuating force values of a plurality of consecutive adjusting cycles and varies the number of adjusting cycles to be run through within the initialisation process as required.

5. Method according to one of the preceding claims, **characterised in that** in addition to the actuating force values at least one further operating or ambient parameter of the adjusting device is measured by the control unit at at least one position on the adjusting path.

6. Method according to claim 5, **characterised in that** the adjusting force comparison values (CFD) are only determined or stored, if the at least one further operating or ambient parameter does not deviate from a predefined standard value beyond predefined tolerance limits during the initialisation process.

7. Method according to claim 5, **characterised in that** the at least one further operating or ambient parameter is used in the control unit (CU) to correct the actuating force comparison values (CFD) determined in the respective initialisation process and the corrected adjusting force comparison values (CFD) are stored.

8. Method according to one of the preceding claims, **characterised in that** initial, reverse and/or end positions within an adjusting cycle are determined during the initialisation process by bringing at least one actuating element of the adjusting device into contact with a mechanical fixed stop.

9. Method according to claim 8, **characterised in that** control functions for the cushioned or braked bringing into contact of the at least one actuating element with a mechanical fixed stop are deactivated during the initialisation process.

10. Adjusting device with at least one power-activated actuating element (AE), at least one drive unit (DU), one transmission mechanism (GU) and at least one control unit (CU), whereby the control unit (CU) controls/regulates the adjusting force (F) generated by the drive unit (DU) as a function of adjusting force comparison values (CFD),
**characterised in that**
the control unit (CU) is connected electrically to at least one electronic storage medium (M), whereby the control unit (CU) is provided to this end to allow the adjusting device to run through a predefined number of adjusting cycles within an initialisation process, to measure a plurality of adjusting forces at assigned actuating element positions along an adjusting path and to store them in the storage medium (M) and to determine adjusting force comparison values (CFD) for assigned actuating element positions from a plurality of adjusting force values within the initialisation process and to store them in the storage medium (M), with the control unit determining the adjusting force comparison values (CFD) from adjusting force values, which are measured in the last adjusting cycle of the predefined number of adjusting cycles, or from a number of measured adjusting force values of a plurality of adjusting cycles.

## Revendications

1. Procédé pour initialiser un dispositif de réglage qui présente un organe de réglage (AE) actionné par une force extérieure (AE), une unité de commande (CU) possédant au moins un support de mémoire électronique (H) et une unité d'entraînement (DU),
dans lequel la force de réglage (F) produite par l'unité d'entraînement (DU) est commandée/réglée par l'unité de commande (CU) en fonction de valeurs comparatives de la force de réglage (CED enregistrées dans le support de mémoire (H),
**caractérisé en ce que**
- dans une séquence d'initialisation, l'unité de commande amène le dispositif de réglage à parcourir un nombre prédéterminé de cycles de réglage,
- dans chacun de ces cycles de réglage, plusieurs valeurs de la force de réglage sont mesurées par l'unité de commande, respectivement dans des positions correspondantes de l'organe de réglage le long d'une course de réglage et sont enregistrées dans le support de mémoire et
- sur la base de plusieurs valeurs de la force de réglage dans la séquence d'initialisation, des valeurs comparatives (CFD) de la force de réglage sont déterminées pour des positions correspondantes de l'organe de réglage et sont enregistrées dans le milieu de mémoire (M),
les valeurs comparatives (CFD) de la force de réglage étant déterminées sur la base de valeurs de la force de réglage qui sont mesurées dans le dernier cycle de réglage du nombre prédéterminé de cycles de réglage ou sur la base d'un nombre de valeurs mesurées de la force de réglage de plusieurs cycle de réglage.

2. Procédé selon la revendication 1, **caractérisé en ce que** la séquence d'initialisation est seulement parcourue dans l'état de montage définitif du dispositif de réglage.

3. Procédé selon une des revendications précédentes, **caractérisé en ce que** le nombre des cycles de réglage qui doivent être parcourus dans la séquence d'initialisation est prédéterminé par une valeur cible et **en ce que**, après chaque cycle de réglage entièrement parcouru, le nombre est incrémenté ou décrémenté par pas définis à partir d'une valeur de départ jusqu'à ce qu'il ait atteint cette valeur cible.

4. Procédé selon une des revendications précédentes, **caractérisé en ce que**, d'après les valeurs de la force de réglage de plusieurs cycles de réglage successifs, l'unité de commande détermine/évalue l'état de mise en service du dispositif de réglage, et modifie selon le besoin le nombre des cycles de réglage à parcourir dans la séquence d'initialisation.

5. Procédé selon une des revendications précédentes, **caractérisé en ce qu'**en supplément des valeurs de la force de réglage, au moins un autre paramètre du fonctionnement ou de l'environnement du dispositif de réglage est mesuré par l'unité de commande dans au moins une position de la course de réglage.

6. Procédé selon la revendication 5, **caractérisé en ce que** les valeurs comparatives de la force de réglage (CFD) ne sont déterminés ou enregistrées que si, pendant la séquence d'initialisation, l'au moins un autre paramètre de fonctionnement ou d'environnement ne s'écarte pas d'une valeur normale prédéterminée de plus de certaines limites de tolérance prédéterminées.

7. Procédé selon la revendication 5, **caractérisé en ce que** l'au moins un autre paramètre de fonctionnement ou d'environnement est utilisé dans l'unité de commande (CU) pour corriger les valeurs comparatives de la force de réglage (CFD) qui ont été déterminées dans la séquence d'initialisation concernée, et les valeurs comparatives de la force de réglage (CFD) corrigées sont enregistrées.

8. Procédé selon une des revendications précédentes, **caractérisé en ce que** des positions de départ, d'inversion et/ou finales au cours de la séquence d'initialisation sont fixées par l'arrivée en butée d'au moins un organe de réglage du dispositif de réglage contre une butée mécanique fixe.

9. Procédé selon la revendication 8, **caractérisé en ce que** des fonctions de commande prévues pour l'arrivée en butée amortie ou freinée de l'au moins un organe de réglage contre une butée mécanique fixe sont désactivées pendant la séquence d'initialisation

10. Dispositif de réglage comprenant un organe de réglage actionné par une force extérieure (AE), au moins une unité d'entraînement (DU), un mécanisme de transmission (GU) et au moins une unité de commande (CU), l'unité de commande (CU) commandant/réglant la force de réglage (F) produite par l'unité d'entraînement (DU) en fonction de valeurs comparatives de la force de réglage (CED,
**caractérisé en ce que**
l'unité de commande (CU) est connectée électriquement à au moins un support de mémoire électronique (M), l'unité de commande étant prévue pour amener le dispositif de réglage à parcourir un nombre prédéterminé de cycles de réglage dans une séquence d'initialisation, mesurer plusieurs valeurs de la force de réglage dans des positions correspondantes de l'organe de réglage le long d'un course de réglage, et pour les enregistrer dans le support de mémoire (M) et, sur la base de plusieurs valeurs de la force de réglage déterminées dans la séquence d'initialisation, déterminer des valeurs comparatives de la force de réglage (CFD) pour des positions correspondantes de l'organe de réglage et les enregistrer dans le support de mémoire (M), l'unité de commande déterminant les valeurs comparatives de la force de réglage (CFD) sur la base de valeurs de la force de réglage qui sont mesurées dans le dernier cycle de réglage du nombre prédéterminé de cycles de réglage, ou sur la base d'un nombre de valeurs de force de réglage mesurées appartenant à plusieurs cycles de réglage.
